# NOUVEAU FASCICULE DE BREVET EUROPEEN

(11) **EP 1 464 230 B2**
(45) Date de publication et mention de la décision concernant l'opposition: **29.02.2012**
(45) Mention de la délivrance du brevet: 21.06.2006
(21) Numéro de dépôt: 04290886.3
(22) Date de dépôt: 02.04.2004
(51) Int. Cl.: A23C 9/123

(54) **Procédé d'homogénéisation haute pression d'une émulsion à base de lait**
Verfahren zur Hochdruckhomogenisierung einer Milchemulsion
Process for high pressure homogenization of a milk emulsion

(30) Priorité: 04.04.2003 FR 0304203
(43) Date de publication de la demande: 06.10.2004
(73) Titulaire: COMPAGNIE GERVAIS DANONE, 75009 Paris (FR)
(72) Inventeur: Schorsch, Catherine, 92100 Boulogne Billancourt (FR)
(74) Mandataire: Jacquard, Philippe Jean-Luc

(56) Documents cités:
- EP-B1- 1 094 718
- WO-A1-00/01246
- FR-A- 2 789 267
- JP-A- 2001 289 123
- US-A- 5 486 372
- M. TUNICK: "Effect of high pressure microfluidisation on microstructure of mozzarella cheese" LEBENSMITTEL-WISSENSCHAFT UND -TECHNOLOGIE, vol. 33, no. 8, 2000, pages 538-544, XP001173160 USA
- LIN C A ET AL: "Effect of homogenization pressure and milk composition on the viscosity of yogurt." JOURNAL OF DAIRY SCIENCE, vol. 78, no. Suppl. 1, 1995, page 149, XP002262209 USA
- FEIJOO S C ET AL: "Effect of microfluidizer on Bacillus licheniformis spores in ice cream mix" 1997, JOURNAL OF DAIRY SCIENCE, AMERICAN DAIRY SCIENCE ASSOCIATION. CHAMPAIGN, ILLINOIS, US, PAGE(S) 2184-2187 , XP002262210 ISSN: 0022-0302 * page 2185; tableau 1 *
- D. OLSON: "Properties of frozen dairy desserts processed by microfluidization of their mixes" JOURNAL OF DAIRY SCIENCE., vol. 86, no. 4, 2003, pages 1157-1162, XP002285427 USAMERICAN DAIRY SCIENCE ASSOCIATION. CHAMPAIGN, ILLINOIS.
- GUERZONI M E ET AL: "EFFECT OF HIGH PRESSURE HOMOGENIZATION ON MICROBIAL AND CHEMICO- PHYSICAL CHARACTERIZATIONS OF GOAT CHEESES" JOURNAL OF DAIRY SCIENCE, AMERICAN DAIRY SCIENCE ASSOCIATION. CHAMPAIGN, ILLINOIS, US, vol. 82, no. 5, mai 1999 (1999-05), pages 851-862, XP000827361 ISSN: 0022-0302
- LEMAY A ET AL: "INFLUENCE OF MICROFLUIDIZATION OF MILK ON CHEDDAR CHEESE COMPOSITION, COLOR, TEXTURE, AND YIELD" JOURNAL OF DAIRY SCIENCE, AMERICAN DAIRY SCIENCE ASSOCIATION. CHAMPAIGN, ILLINOIS, US, vol. 77, no. 10, 1 octobre 1994 (1994-10-01), pages 2870-2879, XP000474830 ISSN: 0022-0302
- A. COBOS: "Rheologiacal properties of acid milk gels" MILCHWISSENSCHAFT, vol. 50, no. 11, 1995, pages 603-606, XP002285420
- ARBUCKLE: 'Ice Cream', 1986, CHAPMAN AND HALL, NEW YORK pages 1-3,32, - 397
- M.G.HAYES ET AL.: 'Influence of high pressure homogenisation on some character' MILCHWISSENSCHAFT vol. 58, no. 9/10, 2003,
- FOOD TECHNOLOGY vol. 52, no. 9, 1996, pages 106 - 110
- D.OLSON: 'Properties of frozen dairy desserts processed by micro' JOURNAL OF DAIRY SCIENCE vol. 78, no. 1, 1995, page 149

## Description

La présente invention concerne un procédé de fabrication d'un produit fermenté, présentant une étape d'homogénéisation haute pression d'une émulsion à base de lait.

Il est connu de fabriquer des produits fermentés tels que les yoghourts brassés en les soumettant en cours de fabrication à une homogénéisation haute pression à des pressions comprises entre 100 et 250 bars.

La technique d'homogénéisation est très ancienne. Elle a été initiée en 1890 par GAULIN et était destinée à l'origine à l'homogénéisation du lait. Elle consiste à faire circuler sous pression à travers un espace étroit une émulsion grossière afin de diminuer la taille des globules gras du lait, et augmenter ainsi la durée de vie du produit en retardant les phénomènes de démixion.

L'homogénéisation haute pression se distingue de la pascalisation qui consiste à soumettre un produit à une haute pression statique pendant un temps relativement long (au-delà de quelques minutes).

FR 2789 267 décrit une boisson lactée et carbonatée et son procédé de préparation. On prépare un mélange (mix lait) de lait et de crème, dans l'un des modes de réalisation, ce mix lait est homogénéisé à une pression comprise entre 30 et 100 MPa (300 et 1000 bars), de préférence 50 à 80 MPa.

La présente invention vise à proposer un procédé d'homogénéisation présentant des performances améliorées, notamment quant à la texture du produit fini.

L'invention concerne ainsi un procédé de fabrication d'un produit fermenté tel que défini dans la revendication 1.

Le procédé selon l'invention conduit à un gain de texture (viscosité) significatif et à une meilleure stabilité à formule égale. Il permet en particulier de réduire le taux de matière protéique, à texture et à qualités organoleptiques équivalentes, par rapport à un procédé d'homogénéisation classique. Il permet aussi de réduire le taux de matière grasse, à texture et à qualités organoleptiques équivalentes, par rapport à un procédé classique.

La pression peut être supérieure à 500 bars et inférieure à 1000 bars et notamment inférieure à 800 bars.

Elle peut être supérieure à 800 bars et inférieure à 1000 bars.

La quantité totale de matières grasses peut être comprise entre 2 % et 6 % en poids et plus particulièrment entre 2% et 4%.

La quantité totale de matières grasses est par exemple comprise entre 3,5 % et 3,6 % en poids, la quantité totale de matières protéinées étant alors comprise entre 4,2 % et 4,6 % en poids.

Préférentiellement, le couple température T1 - pression P est choisi pour que T2 = 95°C. T1 peut être notamment compris entre 60°C et 85°C.

D'autres caractéristiques et avantages de l'invention apparaîtront à la lecture de la description ci-après, en liaison avec les dessins, dans lesquels :
- la figure 1 illustre un mode de mise en oeuvre préféré de l'invention, dit en phase ascendante,
- la figure 2 montre des courbes de distribution de diamètre des particules pour une formulation de type yaourt (ou yoghourt) gras, avant homogénéisation, après homogénéisation à 200 bars (Art Antérieur) et à 1800 bars, la figure 3 montrant les courbes de viscosité initiale en fonction du cisaillement pour l'homogénéisation précitée à 200 bars et à 1800 bars.
- et les figures 4 à 8 représentent des courbes de viscosité initiale en fonction du cisaillement pour diverses formulations et différentes pressions.
- Tous les essais ont été effectués en phase ascendante, sauf l'essai à 200 bars spécifiquement illustré par la figure 6 qui a été effectué en phase descendante.

Au cours du procédé de fabrication des yoghourts (fermes ou brassés), un mélange de lait enrichi en protéines (par exemple par addition de poudre de lait écrémé) et de crème est soumis à un traitement thermique comprenant une homogénéisation, avant la fermentation.

L'homogénéisation telle qu'elle est connue consiste à faire passer le mélange laitier gras, ou non, à travers une valve à une pression de l'ordre de 150 à 250 bars.

L'étape d'homogénéisation transforme l'émulsion laitière initiale grossière en une émulsion de matières grasses dans l'eau qui est plus fine (diamètre des globules gras principalement entre 0,4 µ et 1 µ). La performance de cette étape est liée à la fois à l'équipement et aux conditions opératoires. Des molécules tensioactives (principalement protéines laitières et émulsifiants) sont nécessaires pour stabiliser les nouvelles interfaces eau/huile créées.

Le but de cette étape d'homogénéisation est de créer des globules gras de plus petite taille et donc d'éviter un éventuel crémage de la matière grasse lors de l'étape ultérieure de fermentation. L'homogénéisation qui affine les globules gras en gouttelettes plus petites augmente considérablement la surface interfaciale. Au cours de la fermentation, lors de la fabrication des yoghourts, elles sont incorporées au réseau formé, d'où une texture plus forte et une plus grande stabilité du gel.

La Société Demanderesse a mis en évidence que l'on pouvait obtenir un gain de texture significatif en soumettant le mélange (émulsion) à une homogénéisation à une pression nettement supérieure aux pressions actuellement pratiquées. Cette amélioration de la texture est obtenue pour des pressions P supérieures à environ 400 bars, dans une gamme de pressions comprise entre 400 bars et 2 000 bars.

La gamme de pressions la plus intéressante est comprise entre 500 bars et 1 000 bars.

Des résultats appréciables sont obtenus entre 500 et 800 bars, et des résultats améliorés entre 800 et 1 000 bars, la pression optimale étant d'environ 850 bars.

Une amélioration est encore obtenue en portant la pression à des valeurs supérieures à 1 000 bars, mais l'avantage obtenu est faible et la mise en oeuvre de telles pressions pose par contre des problèmes de mise en oeuvre industrielle.

Au cours de l'homogénéisation, le produit est forcé sous la pression P entre le clapet d'une valve et son siège. La pulvérisation des globules est provoquée successivement par le choc contre le clapet, par le laminage (cisaillement) entre celui-ci et son siège et par l'élongation lors de la détente du lait, l'abaissement brutal de la pression provoquant en outre un éclatement des globules. Il s'y ajoute un effet d'échauffement (différence de température constatée entre la sortie et l'entrée de l'homogénéisation) qui devient sensible à partir de 400 bars et qui est de l'ordre de 2 à 4°C pour une augmentation de la pression de 100 bars. Cette augmentation de température est ainsi d'environ 11°C pour une pression de 800 bars et de 15°C pour une pression de 1 000 bars.

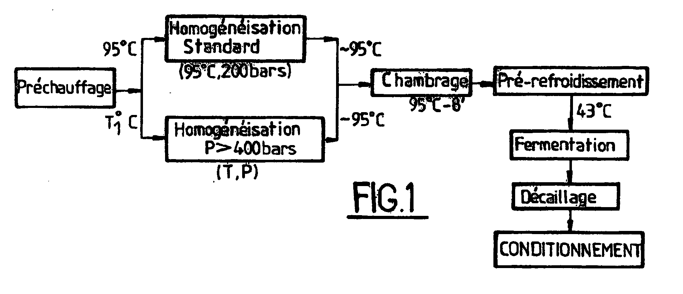

La figure 1 est un organigramme relatif à un exemple de fabrication d'un yoghourt avec une homogénéisation en phase ascendante (c'est-à-dire après préchauffage et avant chambrage). L'émulsion de départ est préchauffée à une température qui est de 95°C pour une homogénéisation standard à 200 bars (branche du haut relative à un procédé classique). Pour une homogénéisation selon l'invention (branche du bas) à une pression P supérieure à 400 bars, le préchauffage est réalisé à une température T1 inférieure à 95°C, qui est choisie, ainsi qu'il sera indiqué plus loin dans la description, pour que la température T2 après homogénéisation soit de l'ordre de 95°C, ce qui évite une détérioration de la qualité du produit.

Par exemple, pour P = 500 bars, T1 = 85°C ; . P = 800 bars, T1 = 75°C ; P = 1000 bars, T1 = 70°C ; P = 1800 bars, T1 = 60°C.

De la sorte, l'échauffement qui intervient au cours de l'homogénéisation est mis à profit pour porter le produit à sa température de chambrage. Ensuite, le mélange homogénéisé est soumis à un chambrage à 95°C pendant 8 minutes (pasteurisation), puis il est pré-refroidi à une température T3 égale à 43°C, et soumis à une fermentation (à 39°C), puis à un décaillage avant d'être conditionné en pots.

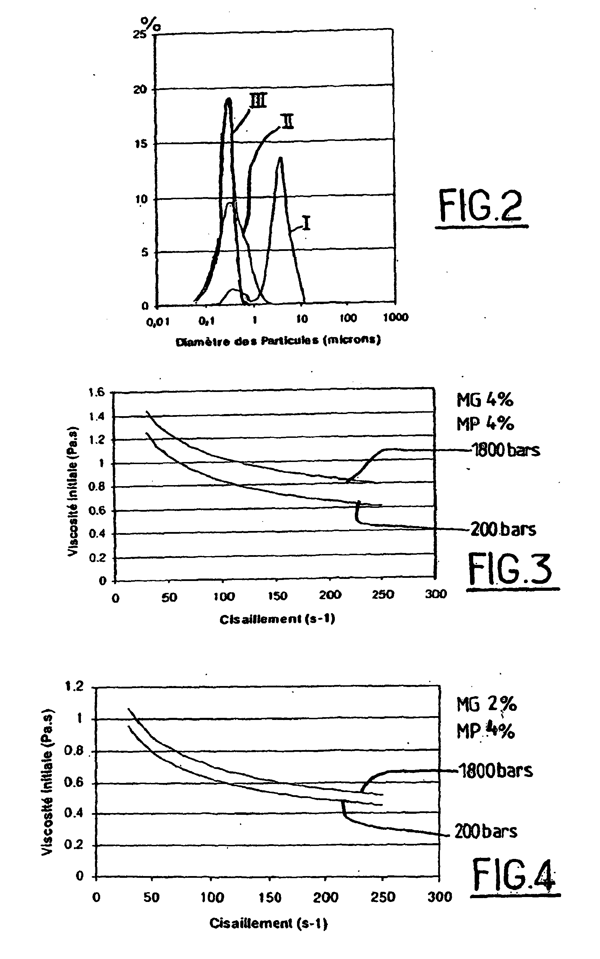

Pour une formule comportant 4 % en poids de matière grasse et 4 % en poids de matières protéinées (« yoghourt gras »), on obtient les courbes de distribution granulométriques des globules gras (GG) qui sont données à la figure 2 avant homogénéisation (courbe I), après homogénéisation selon l'Art Antérieur à 200 bars (courbe II), et après homogénéisation à 1800 bars (courbe III), les courbes de viscosité initiale en fonction du cisaillement étant données à la figure 3 pour les deux pressions d'homogénéisation précitées.

Avant homogénéisation (courbe I), deux populations sont clairement distinctes avec un diamètre médian sensiblement égal à 3,46 µ.

Après homogénéisation (courbes II et III), la distribution devient monomodale (un seul pic), et les micelles de caséine (environ 0,2 à 0,3 µ) coïncident avec les globules gras. L'effet de la pression est visible d'une part sur le diamètre moyen des particules qui passe de 0,4 µ à 200 bars (courbe II) à 0,27 µ à 1800 bars (courbe III). D'autre part, avec une pression de 200 bars, 90 % du volume total de la matière grasse est occupé par des particules de moins de 0,72 µ contre 0,42 µ pour une homogénéisation à 1800 bars. La distribution est donc beaucoup plus étroite à 1800 bars qu'à 200 bars, ainsi que le montre la comparaison entre les courbes II et III.

L'homogénéisation dans les conditions spécifiées permet, toutes formules confondues, la formation d'émulsions plus fines grâce à la réduction de la taille moyenne des globules gras, et à une distribution plus étroite avec une réduction significative des plus gros globules (pratiquement plus de globules gras de taille supérieure à 1 µ dans l'exemple ci-dessus) comparativement à une homogénéisation classique (dans laquelle il subsiste une quantité notable de globules gras de taille supérieure à 1 µ). Ce dernier point revêt une grande importance, car si réduction de la taille moyenne des particules est en effet un but à rechercher, il est encore plus important de rechercher une diminution de la quantité de grosses particules de matières grasses dans la distribution granulométrique, en raison de leur contribution aux phénomènes d'instabilité du produit au cours du temps.

Par ailleurs, on observe que la cinétique de fermentation et de gélification du produit n'est pas modifiée, ce qui montre que la pression d'homogénéisation n'a pas d'effet sur la cinétique et sur la structure viscoélastique du produit.

La gélification est provoquée par le réseau caséine, par aggrégation des protéines.

La figure 3 montre les courbes de viscosité initiale (Pa.s) en fonction du cisaillement (s⁻¹), pour des pressions d'homogénéisation de 200 bars et de 1800 bars pour le produit de la figure 2. Le produit est mesuré en sortie d'un refroidisseur avant lissage.

Comme le montrent les courbes de la figure 3, l'écart de viscosité est constant quelle que soit la vitesse de cisaillement et est de l'ordre de 0,2 Pa.s, ce qui correspond à un gain de viscosité ("gain de texture") de l'ordre de 20 % par rapport à une homogénéisation de type connu (200 bars).

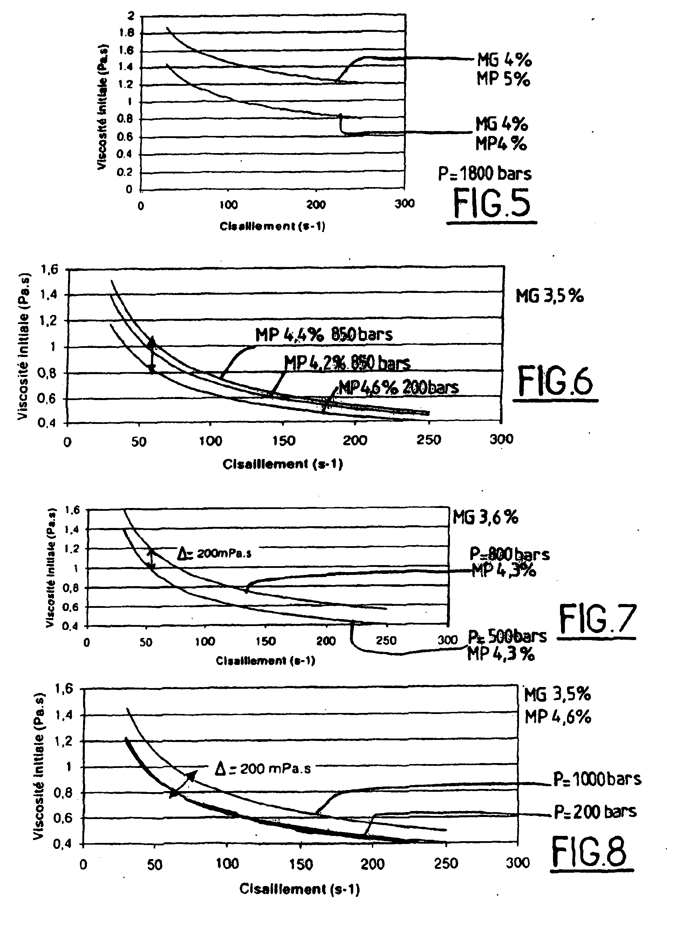

La figure 5 montre les courbes de viscosités dans les conditions de la figure 3, le taux de protéines étant de 4 % et de 5 % respectivement pour une pression d'homogénéisation de 1800 bars. Le gain de viscosité est dans ce cas de l'ordre de 0,3 Pa.s, soit un gain de texture de l'ordre de 25 %. On obtient donc avec 5% de protéines des différences positives encore accrues par rapport à celles obtenues précédemment pour la formule yaourt gras (matières grasses MG 4 % et matières protéinées MP 4 %).

Les niveaux de viscosité significativement supérieurs sont dans tous les cas conservés dans la suite du procédé car la perte de viscosité entre la sortie du refroidisseur et avant conditionnement du produit ("déstructuration") est comprise entre 25 % et 30 % quelle que soit la pression d'homogénéisation appliquée (entre 200 bars et 1800 bars).

Dans le cas d'une composition pondérale de type yaourt maigre (quantité totale de matières grasses MG égale à 2 % et quantité totale de matières protéinées MP égale à 4 %), l'écart de viscosité entre une homogénéisation à 200 bars et à 1800 bars est de l'ordre de 0,06 Pa.s à 0,1 Pa.s. Ceci est illustré par les courbes de viscosité de la figure 4, pour une formulation pondérale comprenant 2 % de matières grasses MG et 4 % de matières protéinées MP. Le passage de 4 % à 5 % du taux de protéines ne modifie pas sensiblement ces observations à ce niveau de taux de matières grasses.

Comme dans le cas d'une composition de type yaourt gras, la déstructuration est pratiquement indépendante de la pression d'homogénéisation.

Les mesures effectuées conduisent ainsi à deux constatations importantes :
- pour une pression d'homogénéisation P donnée, l'augmentation relative de la viscosité est d'autant plus importante que d'une part le taux de matières grasses est élevé et que d'autre part, le taux de matières protéinées est élevé. Le premier point est en particulier illustré par les courbes de viscosité de la figure 4. Le deuxième point est plus particulièrement illustré par la figure 5 qui reporte les valeurs de viscosité initiale pour deux formulations de yaourt gras (MG 4 % et MP égale à 4 % et 5 % respectivement) avec une pression d'homogénéisation de 1800 bars.

L'effet de la pression sur la dispersion granulométrique des globules gras intervient pour l'essentiel entre 500 et 1000 bars. On peut estimer que le phénomène s'amorce vers 400 bars.

Un essai effectué à une pression d'homogénéisation de 850 bars sur une formule à 3,5 % de matière grasse MG et 4,2 % de matière protéinée MP montre que cette pression d'homogénéisation (par rapport à une pression standard de 200 bars) compense la réduction du taux de matière protéique de 0,4 point (passage d'un taux de matière protéique MP de 4,6 % à 4,2 %) aussi bien du point de vue des paramètres de texture, de microstructure que des paramètres organoleptiques.

A taux de matière grasse constant, on peut obtenir avec une pression d'homogénéisation P > 500 bars un produit de viscosité comparable à un produit homogénéisé de manière connue (par exemple à 200 bars), mais en abaissant le taux de matières protéinées MP (c'est-à-dire en pratique, pour une formule de yaourt, en diminuant la quantité de lait écrémé en poudre qui est ajoutée) d'où une économie de matière à qualités organoleptiques égales.

Le procédé selon l'invention permet par exemple, en augmentant la pression d'homogénéisation, de diminuer d'environ 10 % la quantité de matières protéiques (d'où une économie notable) pour un produit dont la qualité organoleptiques est sensiblement identique ou meilleure que celle des produits de l'Art Antérieur, à partir d'une pression d'homogénéisation de 500 bars, la viscosité augmentant avec la pression d'homogénéisation, comme le montre notamment la figure 6.

Sur cette figure, on a représenté la courbe de viscosité initiale en fonction du cisaillement pour trois formules à 3,5 % de matière grasse, et avec trois taux de matière protéinée respectivement 4,6 % (lait entier 85,2 %, crème 1,3 %, sucre 7,3 %, lait écrémé en poudre 6,2 %) et homogénéisation à 200 bars, 4,2 % et homogénéisation à 850 bars, et 4,4 % et homogénéisation à 850 bars, l'homogénéisation ayant lieu en phase ascendante à 850 bars et en phase descendante à 200 bars.

Malgré l'abaissement du taux de matières protéinées MP, on observe une augmentation moyenne Δ de la viscosité qui est de l'ordre de 0,1 Pa.s, ce qui correspond sur le plan organoleptique à une amélioration sensible. Il est à noter également que ce gain de viscosité est observé malgré une première amélioration due au choix d'une phase descendante pour l'essai à 200 bars.

Le passage à 850 bars induit une baisse significative de la taille moyenne et de la distribution en taille des globules gras est plus resserrée, alors que le passage d'une pression de 200 bars à 400 bars affecte plus la distribution en taille des globules gras, que la taille moyenne. Au-delà de 1000 bars, l'augmentation de la viscosité n'est que peu sensible, de même que l'avantage au niveau de la taille des globules gras, et plus particulièrement en ce qui concerne la présence de globule gras de grande taille (1 µ et plus) alors que la mise en oeuvre industrielle est plus difficile à ces niveaux de pression.

II en résulte que la gamme de pression la plus intéressante est comprise entre 500 bars et 1000 bars.

Le passage à une pression de 500 et 800 bars est illustré par la figure 7 pour une formulation à 3,6 % en poids de matière grasse MG. Les courbes de viscosité en fonction du cisaillement correspondent à P = 500 bars et 800 bars pour MP = 4,3 %.

Pour les pressions de 500 et 800 bars, la viscosité reste élevée malgré l'abaissement de 4,5 % à 4,3 % de la proportion en matières protéinées MP. Pour une pression de 800 bars, l'augmentation moyenne Δ de la viscosité est d'environ 0,2 Pa.s, par rapport à celle qui est obtenue pour une homogénéisation à 500 bars.

Enfin, la figure 8, illustre l'influence de la pression (200 bars et 1000 bars) pour une formulation à 3,5 % de matière grasse MG et 4,6 % de matières protéinées MP. On constate un écart moyen Δ de 0,2 Pa.s pour une pression de 1000 bars.

Ces courbes montrent ainsi que la gamme de valeurs de pression P qui est la plus intéressante est comprise entre 500 bars et 1000 bars, et elle est de préférence comprise entre 800 et 1000 bars, les pressions préférées étant de l'ordre de 800 à 850 bars.

A ces niveaux de pression, et en particulier entre 800 bars et 1000 bars, on obtient, à formule égale et par rapport à une homogénéisation conduite de manière classique à une augmentation de la viscosité de l'ordre de 0,2 Pa.s, ce qui se traduit par une nette amélioration sur le plan organoleptique. Toujours à ces niveaux de pression, un abaissement de 5 à 10 % environ de la quantité totale de matière protéinée MP (0,2 % à 0,4 % par rapport à MP environ 4,4 %), qui se traduit par une diminution importante (jusqu'à 25 %) de la quantité de lait écrémé en poudre à ajouter à une formule de type yaourt, permet d'obtenir un produit dont les qualités organoleptiques (testées par un panel) et le maintien dans le temps des caractéristiques sont sensiblement voisines de celles des produits homogénéisés de manière classique à partir d'une formule plus riche en protéines.

Des gains de viscosité supplémentaires pourraient être obtenus, en mettant en oeuvre l'homogénéisation haute pression en phase descendante.

Cependant, dans un souci de simplification du procédé, la phase ascendante peut être préférée.

Les exemples donnés correspondent à des viscosités mesurées le jour Jo de fabrication du produit fini. Les écarts de texture observés entre les produits selon l'invention et les produits de référence sont maintenus ou accrus dans le temps pendant la durée de vie du produit. Les forces de gel mesurées par pénétrométrie confirment également cet écart de texture pendant la durée de vie du produit.

La présente invention permet ainsi de maîtriser ou d'optimiser la texture et la stabilité d'un produit fermenté, yaourt brassé par exemple.

## Revendications

1. Procédé de fabrication d'un produit fermenté comportant, avant sa fermentation, une étape d'homogénéisation haute pression d'une émulsion à base de lait, **caractérisé en ce que** la pression d'homogénéisation P est supérieure à 400 bars et inférieure à 2000 bars, **en ce que** la quantité totale de matière grasse dans l'émulsion est compris entre 2 % et 10 % en poids et **en ce que** la quantité totale de matières protéinées est compris entre 2% et 5% en poids et notamment entre 4 % et 5 % en poids, et **en ce qu'**il comporte :
- un préchauffage de l'émulsion à une première température T1 inférieure à 90 °C,
- ladite homogénéisation, au cours de laquelle l'émulsion est portée à une température de sortie T2 > T1,
- un chambrage à une température sensiblement égale à T2
- un pré-refroidissement à une température T3 < T1, suivi de ladite fermentation.

2. Procédé selon la revendication 1, **caractérisé en ce que** ladite pression est supérieure à 500 bars et inférieure ou égale à 1000 bars.

3. Procédé selon la revendication 2, **caractérisé en ce que** ladite pression est supérieure à 500 bars et inférieure à 800 bars.

4. Procédé selon la revendication 2, **caractérisé en ce que** ladite pression est supérieure à 800 bars et inférieure ou égale à 1000 bars.

5. Procédé selon une des revendications précédentes, **caractérisé en ce que** le taux-de matières grasses est compris entre 2 % et 6 % en poids et plus particulièrement entre 2% et 4%.

6. Procédé selon la revendication 4, **caractérisé en ce que** le taux de matières grasses est sensiblement égal à 4% en poids.

7. Procédé selon la revendication 4, **caractérisé en ce que** le taux de matières grasses est compris entre 3,5 % et 3,6 % et **en ce que** le taux de matières protéinées est compris entre 4,2 % et 4,6 %.

8. Procédé selon une des revendications précédentes, **caractérisé en ce que** le couple température T1 - pression P est choisi pour que T2 soit sensiblement égal à 95°C.

9. Procédé selon la revendication 8, **caractérisé en ce que** T1 est compris entre 60°C et 85°C.

10. Procédé selon la revendication 9, **caractérisé en ce que** P = 500 bars et T1 = 85°C.

11. Procédé selon la revendication 10, **caractérisé en ce que** P = 800 bars, T1 = 75°C.

12. Procédé selon une des revendications 1, 5, 6 ou 7, **caractérisé en ce que** le couple température T1 - pression P est choisi pour que T2 soit sensiblement égal à 95°C et **en ce que** P = 1000 bars, T1 = 70°C.

13. Procédé selon la revendication 1, **caractérisé en ce que** le couple température T1 - pression P est choisi pour que T2 soit sensiblement égal à 95°C et **en ce que** P = 1800 bars, T1 = 60°C.

## Claims

1. A method of manufacturing a fermented product, the method including prior to fermentation, a step of homogenizing a milk-based emulsion at high pressure, the method being **characterized in that** the homogenizing pressure P is greater than 400 bars and less than 2000 bars, **in that** the total quantity of fats in the emulsion lies in the range 2% to 10% by weight, **in that** the total quantity of proteins lies in the range 2% to 5% by weight, and in particular in the range 4% to 5% by weight, and **in that** it comprises:
- preheating the emulsion to a first temperature T1 that is less than 90°;
- performing said homogenizing operation, during which the emulsion is raised to an output temperature T2 > T1;
- allowing to stand at a temperature substantially equal to T2; and
- pre-cooling to a temperature T3 < T1, followed by said fermentation.

2. A method according to claim 1, **characterized in that** said pressure is greater than 500 bars and less than or equal to 1000 bars.

3. A method according to claim 2, **characterized in that** said pressure is greater than 500 bars and less than 800 bars.

4. A method according to claim 2, **characterized in that** said pressure is greater than 800 bars and less than or equal to 1000 bars.

5. A method according to any preceding claim, **characterized in that** the fat content lies in the range 2% to 6% by weight, and more particularly in the range 2% to 4%.

6. A method according to claim 4, **characterized in that** the fat content is substantially equal to 4% by weight.

7. A method according to claim 4, **characterized in that** the fat content lies in the range 3.5% to 3.6%, and **in that** the protein content lies in the range 4.2% to 4.6%.

8. A method according to any preceding claim, **characterized in that** the temperature T1 and the pressure P are selected so that T2 is substantially equal to 95°C.

9. A method according to claim 8, **characterized in that** T1 lies in the range 60°C to 85°C.

10. A method according to claim 9, **characterized in that** P = 500 bars and T1 = 85°C.

11. A method according to claim 10, **characterized in that** P = 800 bars and T1 = 75°C.

12. A method according to any one of claims 1, 5, 6 or 7, **characterized in that** the temperature T1 and the pressure P are selected so that T2 is substantially equal to 95°C and **in that** P = 1000 bars and T1 = 70°C.

13. A method according to claim 1, **characterized in that** the temperature T1 and the pressure P are selected so that T2 is substantially equal to 95°C and **in that** P = 1800 bars and T1 = 60°C.

## Patentansprüche

1. Verfahren zur Herstellung eines fermentierten Produktes, umfassend, vor dessen Fermentation, einen Schritt des Hochdruck-Homogenisierens einer Emulsion auf Basis von Milch, **dadurch gekennzeichnet, dass** der Homogenisierungsdruck P höher als 400 bar und niedriger als 2000 bar ist, dass die Gesamtmenge von Fett in der Emulsion zwischen 2 Gew.-% und 10 Gew.-% liegt, und dass die Gesamtmenge von Eiweißstoffen zwischen 2 Gew.-% und 5 Gew.-% und insbesondere zwischen 4 Gew.-% und 5 Gew.-% beträgt, sowie dass es aufweist:
- ein Vorerhitzen der Emulsion auf eine erste Temperatur T1 von weniger als 90°C,
- die Homogenisierung, in deren Verlauf die Emulsion auf eine Austrittstemperatur T2 > T1 gebracht wird,
- ein Chambrieren auf eine Temperatur, die im wesentlichen gleich T2 ist,
- ein Vorkühlen auf eine Temperatur T3 < T1,
gefolgt von der Fermentation.

2. Verfahren nach Anspruch 1, **dadurch gekennzeichnet, dass** der genannte Druck höher als 500 bar und niedriger als 1000 bar ist.

3. Verfahren nach Anspruch 2, **dadurch gekennzeichnet, dass** der genannte Druck höher als 500 bar und niedriger als 800 bar ist.

4. Verfahren nach Anspruch 2, **dadurch gekennzeichnet**, der genannte Druck höher als 800 bar und niedriger als 1000 bar ist.

5. Verfahren nach einem der vorhergehenden Ansprüche, **dadurch gekennzeichnet, dass** der Anteil von Fetten zwischen 2 Gew.-% und 6 Gew.-% und insbesondere zwischen 2 Gew.-% und 4 Gew.-% beträgt.

6. Verfahren nach Anspruch 4, **dadurch gekennzeichnet, dass** der Anteil von Fetten im wesentlichen gleich 4 Gew.-% ist.

7. Verfahren nach Anspruch 4, **dadurch gekennzeichnet, dass** der Anteil von Fetten zwischen 3,5% und 3,6% liegt, und dass der Anteil von Eiweißstoffen zwischen 4,2% und 4,6% beträgt.

8. Verfahren nach einem der vorhergehenden Ansprüche, **dadurch gekennzeichnet, dass** das Paar Temperatur T1 - Druck P so gewählt wird, dass T2 im wesentlichen gleich 95°C ist.

9. Verfahren nach Anspruch 8, **dadurch gekennzeichnet, dass** T1 zwischen 60°C und 85°C liegt.

10. Verfahren nach Anspruch 9, **dadurch gekennzeichnet, dass** P = 500 bar und T1 = 85°C.

11. Verfahren nach Anspruch 10, **dadurch gekennzeichnet, dass** P = 800 bar, T1 = 75°C.

12. Verfahren nach einem der Ansprüche 1, 5, 6 oder 7, **dadurch gekennzeichnet, dass** das Paar Temperatur T1 - Druck P so gewählt wird, dass T2 im wesentlichen gleich 95°C ist und dass P = 1000 bar, T1 = 70°C.

13. Verfahren nach Anspruch 1, **dadurch gekennzeichnet, dass** das Paar Temperatur T1 - Druck P so gewählt wird, dass T2 im wesentlichen gleich 95°C ist und dass P = 1800 bar, T1 = 60°C.
